# EUROPEAN PATENT APPLICATION

(11) **EP 4 450 651 A1**
(43) Date of publication of application: **23.10.2024**
(21) Application number: 22923522.1
(22) Date of filing: 13.12.2022
(51) Int. Cl.: C21B 5/06, C21B 5/00, C21B 7/16

(54) **IRON-MAKING METHOD OF HYDROGEN-ENRICHED CARBON CYCLE BLAST FURNACE**

(30) Priority: 30.01.2022 CN 202210114407
(71) Applicant: Xinjiang Bayi Iron & Steel Co., Ltd., Urumqi, Xinjiang 830022 (CN)
(72) Inventor: JI, Shumin, Urumqi, Xinjiang 830022 (CN); XU, Xiaobing, Urumqi, Xinjiang 830022 (CN); JIA, Zhiguo, Urumqi, Xinjiang 830022 (CN); CHEN, Ruoping, Urumqi, Xinjiang 830022 (CN); LI, Tao, Urumqi, Xinjiang 830022 (CN); YANG, Chunlei, Urumqi, Xinjiang 830022 (CN)
(74) Representative: Frick, Robert
(86) International application number: PCT/CN2022/138700
(87) International publication number: WO 2023/142734

(57) **Abstract**

The present disclosure discloses method for ironmaking in blast furnace with hydrogen enriched and carbon recycling, including increasing a proportion of oxygen blown through tuyeres to an ultra-high level of 35% to 50% with an oxygen enrichment in a traditional blast furnace as a reference; removing CO₂ from top gas by using an amine scrubbing method, and then injecting it into the blast furnace with hydrogen enriched and carbon recycling; a distance between the inlet of gas for heating furnace body and the gas injection ports of the composite tuyere device is L1, and a distance between the inlet of gas for heating furnace body and the top of furnace is L2, where L1: L2 is 6.5: 8.2, an angle between the inlet of gas for heating furnace body and a lower part of outer wall of the furnace body is β, where β is in a range of 112° to 130°, the temperature of the high-temperature upgraded gas entering the blast furnace is 950°C when entering from the furnace body and 1200°C when entering through the tuyeres, using sintered ore with a basicity R = 1.75 ± 0.05, and checking charges according to a requirement for slag to contain more than 15% Al₂O₃ and to have a binary basicity B2 = CaO/SiO2 = 1.02-1.10; doping decarbonized gas from the Oxyfurnace and coke oven gas into the recycling gas pipeline at the inlets of the composite tuyere device, with a combined amount thereof is 12% to 25% of the total amount of high-temperature upgraded gas introduced into the blast furnace with hydrogen enriched and carbon recycling.

## Description

### CROSS-REFERENCE TO RELATED DISCLOSURES

This disclosure claims priority to Chinese Patent Application No. 2022101144071, filed on January 30, 2022, entitled "method for ironmaking in blast furnace with hydrogen enriched and carbon recycling", which is hereby incorporated by reference in its entirety.

### TECHNICAL FIELD

The present disclosure relates to a technical field of low-carbon metallurgy, particularly relates to a method for ironmaking in blast furnace with hydrogen enriched and carbon recycling.

### BACKGROUND

With the increasingly prominent issue of global climate warming, reducing CO₂ emissions has become a challenge for all of humanity. The steel industry, which is based on carbon metallurgy, accounts for 5% to 6% of the total global CO₂ emissions due to CO₂ generated during its production process. The CO₂ emissions in the steel industry mainly come from by-product gas generated in processes such as sintering, coking, ironmaking, and steelmaking. Therefore, reduction of CO₂ emissions is closely related to the efficient recycling of gas. CO₂ emissions may be significantly reduced by improving a recycling efficiency of gas. In general, the amount of CO₂ in ironmaking gas generated in traditional steel enterprises accounts for about 70% of the total CO₂ generated during steel process. Therefore, ironmaking is the focus of energy saving and emission reduction, and the development of low-carbon ironmaking technology is an effective way for the steel industry to achieve low-carbon development and green sustainable development.

An effective way of low-carbon ironmaking technology in blast furnaces is to utilize oxygen-enriched blast furnace technology, which has a disadvantage that the amount of gas generated by combustion of carbon in unit is reduced, and the theoretical combustion temperature in front of the tuyere rises. The heat is concentrated in a lower part of the blast furnace, and a temperature of hearth rises, which facilitates reduction of some difficult-to-reduce elements such as silicon and manganese. After oxygen-enriched air is blown, a proportion of nitrogen is reduced, and the concentration of a reducing agent CO in generated gas increases. Especially when fuel with a high H/C ratio is blown, the proportion of H₂ in the gas increases, which facilitates the development of indirect reduction in the blast furnace and reduces coke consumption. The decreasing of proportion of nitrogen in the gas increases a calorific value accordingly, so that a quality of the gas at top of the blast furnace is improved. Blowing oxygen-enriched air raises a theoretical combustion temperature in front of tuyeres, and further increases an amount of injected fuel, to generate greater economic benefits. In a blast furnace with all oxygen blown, there is almost no nitrogen blown in, the reduction efficiency is improved, and primary reduction substance becomes pulverized coal. When the pulverized coal injected exceeds a limit, an amount of unburned pulverized coal increases, and it is easy to be accumulated in the hearth, and deteriorate a condition in the furnace. Additionally, since the amount of gas flowing to an upper part of the blast furnace in a blast furnace with all-oxygen blown is significantly reduced compared to before, an amount of heat brought to the upper part of the blast furnace is greatly reduced, resulting in a problem that it is cold at the upper part of the blast furnace while hot at the lower part, which affects smooth flow of the charges.

### BRIEF SUMMARY

The object of the present invention is to provide a method for ironmaking in blast furnace with hydrogen enriched and carbon recycling to significantly reduce the consumption of fossil fuels such as coke and pulverized coal, and reduce greenhouse gas emissions during ironmaking. Meanwhile, an all-oxygen process applied with gas recycling significantly increases an amount of gas in a belly of the furnace and an upper part of the furnace, so as to address a problem of insufficient heat in the upper part of the blast furnace and a problem of the blast furnace being cold at an upper part and hot at a lower part and thus to ensure reduction efficiency and smooth descent of the charges.

The present disclosure may be implemented with following technical solutions:
A method for ironmaking in blast furnace with hydrogen enriched and carbon recycling includes the following steps and configurations:
(1) increasing a proportion of oxygen blown through tuyeres to an ultra-high level of 35% to 50% with an oxygen enrichment in a traditional blast furnace in a base period;
(2) injecting pure oxygen with 100% oxygen, heated high-temperature coke oven gas, and high-temperature decarbonized gas into the blast furnace with hydrogen enriched and carbon recycling, adding ore and coke from a top of the furnace, and introducing a top gas from top of the furnace into a decarbonization device where CO₂ is removed from the top gas by using an amine scrubbing method, to form high-temperature upgraded gas, which is then re-injected into the blast furnace with hydrogen enriched and carbon recycling;
(3) a system for ironmaking in the blast furnace with hydrogen enriched and carbon recycling includes the blast furnace with hydrogen enriched and carbon recycling and a system for decarbonizing-recycling and heating-injecting of the top gas from top of the furnace, the blast furnace with hydrogen enriched and carbon recycling is provided with a composite tuyere device having oxygen tuyeres and gas injection ports arranged circularly on hearth of the blast furnace, an inlet of gas for heating furnace body is arranged in a lower-middle part of the blast furnace, a distance between the inlet of gas for heating furnace body and the gas injection ports of the composite tuyere device is L1, and a distance between the inlet of gas for heating furnace body and the top of furnace is L2, where L1: L2 is 6.5: 8.2, an angle between the inlet of gas for heating furnace body and a lower part of outer wall of the furnace body is β, where β is in a range of 112° to 130°, the composite tuyere device is used for injecting pure oxygen and tuyere heating gas, while an inlet of the tuyere heating gas and the inlet of gas for heating furnace body are used for injecting high-temperature upgraded gas generated by electric heating after CO₂ is removed from the top gas, the temperature of the high-temperature upgraded gas entering the blast furnace is 950°C when entering from the furnace body and 1200°C when entering through the tuyeres;
(4) Using a reasonable charge structure: in a case of a charge structure without using lump ore sintered ore: pellets = 55-60%: 45-40%, in a case of a charge structure using lump ore: sintered ore: pellet ore: lump ore = 60%: 35%: 5%, with existing Baosteel self-produced sintered ore with a basicity R = 1.75 ± 0.05, and checking charges according to a requirement for slag to contain more than 15% Al₂O₃ and to have a binary basicity B2 = CaO/SiO2 = 1.02-1.10;
(5) a system in which hydrogen-enriched furnace, Oxyfurnace, and coke oven are coupled with each other: the coupling with the Oxyfurnace means that the gas from the Oxyfurnace is decarbonized and passes through a pressurizer and a gas pipeline to enter the top gas recycling pipeline of the hydrogen-enriched furnace, and is then injected into the blast furnace after being heated; the coupling with the coke oven means that coke oven gas passes through a compressor and a gas pipeline to enter the top gas recycling pipeline of the hydrogen-enriched furnace, and is then injected into the blast furnace after being heated; decarbonized gas from the Oxyfurnace and coke oven gas are doped into the recycling gas pipeline at the inlets of the composite tuyere device, with a combined amount thereof is 12% to 25% of the total amount of high-temperature upgraded gas introduced into the blast furnace with hydrogen enriched and carbon recycling;
(6) volume ratio of CO, CO₂, H₂, and N₂ in the top gas is 40-65: 20-35: 4-15: 2-5; volume ratio of CO, CO₂, H₂, and N₂ in the self-circulating decarbonized gas is 55-75: 0.1-1: 12-25: 5-15; volume ratio of CO, CO₂, H₂, and N₂ in the decarbonized gas from the Oxyfurnace is 68: 0.8: 9.5: 10; volume ratio of CO, CO₂, H₂, and NH₄ in the coke oven gas is 8: 3: 57: 24.

The present disclosure has the following advantages:
1) It is possible to have an ultra-high proportion, 35% to 50%, of oxygen, which exceeds a base of oxygen-enriched and a limit of oxygen-enriched in the blast furnace of prior art with producing and practice in phases, so that all-oxygen operation is eventually achieved.
2) Inlets for high-temperature decarbonized upgraded gas are provided at the furnace body to address the problem of the blast furnace with hydrogen enriched and carbon recycling being cold at the top and hot at the bottom, and to preheat iron ore to a certain degree, so that the utilization of overall heat and smooth moving of charges within the blast furnace are improved to the best. Meanwhile, with the problem of the blast furnace being cold at the top and hot at the bottom being solved in the present disclosure, the gas may be utilized in a more reasonable and efficient way, and the consumption of fossil fuel coke may be significantly reduced.
3) With the ratio of the distance between the inlet of the composite tuyere device and the inlet of gas for heating furnace body, and the distance between the inlet of gas for heating furnace body and the upper gas retention zone set properly, the high-temperature decarbonized upgraded gas may make more sufficient supplyment of heat on the cold upper zone in the furnace without rendering excessive heating and wasting resources, and adverse damage to the internal coke skeleton can be prevented. With an angle of the inlet of gas for heating furnace body set properly, turbulence can be prevented to form near the inlet in furnace body based on kinetic conditions of the internal hot gas, while a large thermal circulation laminar flow replacement may be formed so that the heat may be fully supplymented to the furnace body.
4) With CO₂ and part of H₂O removed from the top gas by a decarbonization device and electric heating device and then heated, a large amount of physical and chemical heat is brought into the furnace. The quality of generated gas may be greatly improved due to the removal of CO₂ therefrom, so that a reducing atmosphere within the furnace may be improved, to facilitate the reduction of the charges. The top gas and the heat during the process are utilized reasonably, so that the recycling of materials and energy is optimized and costs and environmental pressure are greatly relieved.

### DETAILED DESCRIPTION

A method for ironmaking in blast furnace with hydrogen enriched and carbon recycling includes the following steps and configurations:
(1) increasing a proportion of oxygen blown through tuyeres to exceed a oxygen enrichment rate of 5%, i.e., a proportion of oxygen of 26%, up to an ultra-high level of 35% to 50%, with an oxygen enrichment process in a traditional blast furnace as a base period;
(2) injecting pure oxygen with 100% oxygen, heated high-temperature coke oven gas, and high-temperature decarbonized gas into the blast furnace with hydrogen enriched and carbon recycling, adding ore and coke from a top of the furnace, and introducing a top gas from top of the furnace into a decarbonization device where CO₂ is removed from the top gas by using an amine scrubbing method, to form high-temperature upgraded gas, which is then re-injected into the blast furnace with hydrogen enriched and carbon recycling;
(3) a system for ironmaking in the blast furnace with hydrogen enriched and carbon recycling includes the blast furnace with hydrogen enriched and carbon recycling and a system for decarbonizing-recycling and heating-injecting of the top gas from top of the furnace, the blast furnace with hydrogen enriched and carbon recycling is provided with a composite tuyere device having oxygen tuyeres and gas injection ports arranged circularly on hearth of the blast furnace, an inlet of gas for heating furnace body is arranged in a lower-middle part of the blast furnace, a distance between the inlet of gas for heating furnace body and the gas injection ports of the composite tuyere device is L1, and a distance between the inlet of gas for heating furnace body and the top of furnace is L2, where L1: L2 is 6.5: 8.2, an angle between the inlet of gas for heating furnace body and a lower part of outer wall of the furnace body is β, where β is in a range of 112° to 130°, the composite tuyere device is used for injecting pure oxygen and tuyere heating gas, while an inlet of the tuyere heating gas and the inlet of gas for heating furnace body are used for injecting high-temperature upgraded gas generated by electric heating after CO₂ is removed from the top gas, the temperature of the high-temperature upgraded gas entering the blast furnace is 950°C when entering from the furnace body and 1200°C when entering through the tuyeres;
(4) Using a reasonable charge structure: in a case of a charge structure without using lump ore, sintered ore: pellets = 55-60%: 45-40%, and in a case of a charge structure using lump ore: sintered ore: pellet ore: lump ore = 60%: 35%: 5%, with existing Baosteel self-produced sintered ore with a basicity R = 1.75 ± 0.05, and checking charges according to a requirement for slag to contain more than 15% Al₂O₃ and to have a binary basicity B2 = CaO/SiO₂ = 1.02-1.10;
(5) the top gas may include CO, CO₂, H₂, and a small amount of N₂;
(6) a system in which hydrogen-enriched furnace, Oxyfurnace, and coke oven are coupled with each other: the coupling with the Oxyfurnace means that the gas from the Oxyfurnace is decarbonized and passes through a pressurizer and a gas pipeline to enter the top gas recycling pipeline of the hydrogen-enriched furnace, and is then injected into the blast furnace after being heated; the coupling with the coke oven means that coke oven gas passes through a compressor and a gas pipeline to enter the top gas recycling pipeline of the hydrogen-enriched furnace, and is then injected into the blast furnace after being heated; some decarbonized gas from the Oxyfurnace and coke oven gas are doped into the recycling gas pipeline at the inlets of the composite tuyere device according to practice in producing, with an amount thereof is 12% to 25% of the total amount of high-temperature upgraded gas introduced into the blast furnace with hydrogen enriched and carbon recycling;
(7) volume ratio of CO, CO₂, H₂, and N₂ in the top gas is 40-65: 20-35: 4-15: 2-5; volume ratio of CO, CO₂, H₂, and N₂ in the self-circulating decarbonized gas is 55-75: 0.1-1: 12-25: 5-15; volume ratio of CO, CO₂, H₂, and N₂ in the decarbonized gas from the Oxyfurnace is 68: 0.8: 9.5: 10; volume ratio of CO, CO₂, H₂, and NH₄ in the coke oven gas is 8: 3: 57: 24.

### Examples in on-site producing:

Base period:
- Production: 1150 t/d
- Utilization coefficient: 3.03
- Air flow rate: 900 Nm³/min
- Pressure at top: 95 kPa
- Air temperature: 900°C
- Coke ratio: 464 kg/t
- Coal ratio: 160 kg/t
- Blast oxygen proportion: 35%
- Oxygen enrichment rate: 14%

in a case of a charge structure without using lump ore, composition and mass proportion: sintered ore: pellets = 55-60%: 45-40%;
in a case of a charge structure using lump ore, composition and mass proportion: sintered ore: pellet ore: lump ore = 60%: 35%: 5%;
when using the existing Baosteel self-produced sintered ore: basicity R = 1.75 ± 0.05. Binary basicity B2 = CaO/SiO₂ = 1.05-1.12.

Development Period:
- Injecting decarbonized gas from the Oxyfurnace and coke oven gas.
- Production: 1200 t/d
- Utilization coefficient: 3.15
- Air flow rate: 700 Nm³/min
- Pressure at top: 100 kPa
- Air temperature: 950°C
- Coke ratio: 400 kg/t
- Coal ratio: 80 kg/t
- Blast oxygen proportion: 50%
- Oxygen enrichment rate: 29%
- Amount of decarbonized gas from the Oxyfurnace and coke oven gas injected through tuyeres: 250 Nm³/t,
   in a case of a charge structure without using lump ore: sintered ore: pellets = 54%: 46%;
   in a case of a charge structure using lump ore: sintered ore: pellet ore: lump ore = 50%: 47%: 3%;
   when using the existing Baosteel self-produced sintered ore: basicity R = 1.75 ± 0.05. Binary basicity B2 = CaO/SiO₂ = 1.03-1.10.
   Completion Period: * *
- Injecting self-circulating decarbonized gas 500 Nm³/t, injecting decarbonized gas from the Oxyfurnace and coke oven gas with a supplyment amount: 0 Nm³/t.
- Production: 1550 t/d
- Utilization coefficient: 4.0
- Air flow rate: 0 Nm³/min
- Pressure at top: 150 kPa
- Air temperature: 0°C
- Coke ratio: 390 kg/t
- Coal ratio: 0 kg/t
- Blast oxygen proportion: 100%
- Gas temperature at tuyeres: ≥ 1100° C
- Gas temperature of furnace body: ≥ 900° C

in a case of a charge structure without using lump ore: sintered ore: pellets = 53%: 47%;
in a case of a charge structure using lump ore: sintered ore: pellet ore: lump ore = 49%: 48%: 3%;
when using the existing Baosteel self-produced sintered ore: basicity R = 1.75 ± 0.05. Binary basicity B2 = CaO/SiO₂ = 1.02-1.10.

| self-circulatin 9 | Increase of production % | Increase of productio n t | Utilizatio n coefficien t | Displacemen t ratio | Cok e ratio | Decreas e of coke ratio | Coa l rati o | Fue l rati o | TF | Reduc e of carbon (kg) | Utilizatio n of CO% | Utilizatio n of H₂% |
|---|---|---|---|---|---|---|---|---|---|---|---|---|
| 0 | 0.00% | 0 | 3.0 | 0 | 464 | 0.00% | 170 | 634 | 240 0 | 0 | 41.50 | 36.62 |
| 500 | 23.09% | 323 | 4.0 | 0.4 | 390 | 18.97% | 0 | 390 | 240 0 | 173 | 41.50 | 36.62 |

Compared with the case where blast oxygen proportion is 35%, the fuel ratio is decreased by 244 kg/t iron, carbon is reduced by 173 kg/t, and production is increased by 23%.

Ending Period:
- Injecting self-circulating decarbonized gas 500 Nm³/t, injecting decarbonized gas from the Oxyfurnace and coke oven gas with a supplyment amount: starting with 50 Nm³/t and increased to 300 Nm³/t.
- Production: 1750 t/d
- Utilization coefficient: 4.6
- Air flow rate: 0 Nm³/min
- Pressure at top: 190-200 kPa
- Air temperature: 0°C
- Coke ratio: decreased from 390 kg/t to 270 kg/t
- Coal ratio: 0 kg/t
- Blast oxygen proportion: 100%
- Gas temperature at tuyeres: ≥ 1100° C
- Gas temperature of furnace body: ≥ 900° C

in a case of a charge structure without using lump ore:: sintered ore: pellets = 52%: 48%;
in a case of a charge structure using lump ore: sintered ore: pellet ore: lump ore = 48%: 49%: 3%;
when using the existing Baosteel self-produced sintered ore: basicity R = 1.75 ± 0.05. Binary basicity B2 = CaO/SiO₂ = 1.01-1.10.

| | | | | | | | | | | | | | |
|---|---|---|---|---|---|---|---|---|---|---|---|---|---|
| Suppleme nt of air | self-circulati ng | Increase of production % | Increase of product on t i | Utilizati on coefficie nt | Displaceme nt ratio | Cok e ratio | Decrea se of coke ratio | Coa l rati o | Fue l rati o | TF | Reduc e of carbo n (kg) | Utilizati on of CO% | Utilizati on of H₂% |
| 0 | 0 | 0.00% | 0 | 3.0 | 0 | 464 | 0.00% | 170 | 634 | 240 0 | 0 | 41.50 | 36.62 |
| 0 | 500 | 23.09% | 323 | 4.0 | 0.4 | 390 | 18.97% | 0 | 390 | 240 0 | 173 | 41.50 | 36.62 |
| 50 | 550 | 24.98% | 350 | 4.1 | 0.4 | 370 | 24.10% | 0 | 370 | 231 2 | 190 | 44.41 | 28.27 |
| 300 | 800 | 34.45% | 482 | 4.6 | 0.4 | 270 | 49.74% | 0 | 270 | 187 2 | 275 | 62.28 | 17.36 |

Compared with the case of self-circulating with full oxygen, the fuel ratio is decreased by 120 kg/t iron, carbon is reduced by 102 kg/t, and production is increased by 11%.

## Claims

1. A method for ironmaking in blast furnace with hydrogen enriched and carbon recycling, **characterized in that**, comprising the following steps and configurations:
(1) increasing a proportion of oxygen blown through tuyeres to an ultra-high level of 35% to 50% with an oxygen enrichment in a traditional blast furnace as a reference;
(2) injecting pure oxygen with 100% oxygen, heated high-temperature coke oven gas, and high-temperature decarbonized gas into the blast furnace with hydrogen enriched and carbon recycling, adding ore and coke from a top of the furnace, and introducing a top gas from top of the furnace into a decarbonization device where CO₂ is removed from the top gas by using an amine scrubbing method, to form high-temperature upgraded gas, which is then re-injected into the blast furnace with hydrogen enriched and carbon recycling;
(3) a system for ironmaking in the blast furnace with hydrogen enriched and carbon recycling includes the blast furnace with hydrogen enriched and carbon recycling and a system for decarbonizing-recycling and heating-injecting of the top gas from top of the furnace, the blast furnace with hydrogen enriched and carbon recycling is provided with a composite tuyere device having oxygen tuyeres and gas injection ports arranged circularly on hearth of the blast furnace, an inlet of gas for heating furnace body is arranged in a lower-middle part of the blast furnace, a distance between the inlet of gas for heating furnace body and the gas injection ports of the composite tuyere device is L1, and a distance between the inlet of gas for heating furnace body and the top of furnace is L2, where L1: L2 is 6.5: 8.2, an angle between the inlet of gas for heating furnace body and a lower part of outer wall of the furnace body is β, where β is in a range of 112° to 130°, the composite tuyere device is used for injecting pure oxygen and tuyere heating gas, while an inlet of the tuyere heating gas and the inlet of gas for heating furnace body are used for injecting high-temperature upgraded gas generated by electric heating after CO₂ is removed from the top gas, the temperature of the high-temperature upgraded gas entering the blast furnace is 950°C when entering from the furnace body and 1200°C when entering through the tuyeres;
(4) composition and mass percentage of charge structure: in a case of a charge structure without using lump ore sintered ore: pellets = 55-60%: 45-40%, in a case of a charge structure using lump ore: sintered ore: pellet ore: lump ore = 60%: 35%: 5%, with existing Baosteel self-produced sintered ore with a basicity R = 1.75 ± 0.05, and checking charges according to a requirement for slag to contain more than 15% Al₂O₃ and to have a binary basicity B2 = CaO/SiO2 = 1.02-1.10;
(5) a system in which hydrogen-enriched furnace, Oxyfurnace, and coke oven are coupled with each other: the coupling with the Oxyfurnace means that the gas from the Oxyfurnace is decarbonized and passes through a pressurizer and a gas pipeline to enter the top gas recycling pipeline of the hydrogen-enriched furnace, and is then injected into the blast furnace after being heated; the coupling with the coke oven means that coke oven gas passes through a compressor and a gas pipeline to enter the top gas recycling pipeline of the hydrogen-enriched furnace, and is then injected into the blast furnace after being heated; decarbonized gas from the Oxyfurnace and coke oven gas are doped into the recycling gas pipeline at the inlets of the composite tuyere device, with a combined amount thereof is 12% to 25% of the total amount of high-temperature upgraded gas introduced into the blast furnace with hydrogen enriched and carbon recycling;
(6) volume ratio of CO, CO₂, H₂, and N₂ in the top gas is 40-65: 20-35: 4-15: 2-5; volume ratio of CO, CO₂, H₂, and N₂ in the self-circulating decarbonized gas is 55-75: 0.1-1: 12-25: 5-15; volume ratio of CO, CO₂, H₂, and N₂ in the decarbonized gas from the Oxyfurnace is 68: 0.8: 9.5: 10; volume ratio of CO, CO₂, H₂, and NH₄ in the coke oven gas is 8: 3: 57: 24.
